# EUROPEAN PATENT SPECIFICATION

(11) **EP 2 738 306 B1**
(45) Date of publication and mention of the grant of the patent: **07.06.2017**
(21) Application number: 12817673.2
(22) Date of filing: 25.07.2012
(51) Int. Cl.: D06M 14/22, C08F 251/02, D06M 101/04, A01N 25/10, A01N 25/34, D06M 10/00, D06M 10/08, D06M 11/38, D06M 14/04, D06M 16/00, D06M 11/70, D06M 101/06

(54) **PATHOGENIC FACTOR PRODUCTION-INHIBITING FIBER AND METHOD FOR PRODUCING SAME**
FASER ZUR HEMMUNG KRANKHEITSERREGENDER FAKTOREN UND VERFAHREN ZU IHRER HERSTELLUNG
FIBRE INHIBANT LA PRODUCTION D'UN FACTEUR PATHOGÈNE ET PROCÉDÉ DE PRODUCTION DE CETTE DERNIÈRE

(30) Priority: 26.07.2011 JP 2011162826; 03.02.2012 JP 2012022079
(43) Date of publication of application: 04.06.2014
(73) Proprietor: Kyoto Prefectural Public University Corporation, Kyoto 602-8566 (JP); Kurashiki Boseki Kabushiki Kaisha, Kurashiki-shi Okayama 710-0054 (JP)
(72) Inventor: MIYAZAKI Kohji, Kyoto 606-8522 (JP); OHSHIMA Kunihiro, Osaka 572-0823 (JP); KATSUEN Susumu, Osaka 541-8581 (JP)
(74) Representative: de Bresser, Sara Jean
(86) International application number: PCT/JP2012/068810
(87) International publication number: WO 2013/015307

(56) References cited:
- WO-A1-2010/018792
- JP-A- 63 196 768
- JP-A- 2000 045 179
- JP-A- 2002 105 882
- JP-A- 2009 091 707
- JP-A- 2012 046 437
- JP-A- 2012 149 360
- US-A- 5 071 880
- US-A- 5 194 454
- US-A1- 2011 078 993
- DATABASE WPI Week 200476 Thomson Scientific, London, GB; AN 2004-768898 XP002675369, & JP 2004 292956 A (KURABO IND LTD) 21 October 2004 (2004-10-21)
- DATABASE WPI Week 201002 Thomson Scientific, London, GB; AN 2009-S08069 XP002738663, -& JP 2009 287011 A (DAINIPPON INK & CHEM INC) 10 December 2009 (2009-12-10)

## Description

### Technical Field

The present invention relates to the use of a fiber comprising an inhibitor of virulence factors production fixed to the fiber by chemical bonding as an inhibitory fiber against virulence factors production. The present description discloses an inhibitory fiber against virulence factors production comprising a fiber and an inhibitor of virulence factors production fixed to the fiber by chemical bonding, and a method for producing the inhibitory fiber against virulence factors production.

### Background Art

Antibacterial drugs such as antibiotics have been used to treat infectious diseases. However, as a result of the overuse of antibacterial drugs, multidrug-resistant bacteria, which are resistant to antibiotics, have come into being, causing nosocomial infection. Since there is no effective way of treating nosocomial infection at present, this serious medical problem remains unsolved. Examples of major pathogenic bacteria that cause nosocomial infection include Pseudomonas aeruginosa and Staphylococcus aureus. Both Pseudomonas aeruginosa and Staphylococcus aureus are typical opportunistic pathogens to humans. Patients may be infected with these bacteria when their immune function declines, and the infection may result in deaths from time to time. Although both of these pathogenic bacteria are highly resistant to disinfectants and antibiotics by nature, there are also many bacteria that have acquired drug resistance. Therefore, it is difficult to treat the diseases infected by drug resistant pathogens once they develop.

As explained above, antibiotics are not effective on pathogenic bacteria that acquired drug resistance (particularly multidrug resistance). That is, since there are limits to the use of antibacterial drugs including antibiotics, the development of therapeutic and preventive drugs whose mechanisms of action are completely different from those of antibiotics is desired. In recent years, it has been found that cell signaling molecules called autoinducers, which are produced by many pathogenic bacteria including multidrug-resistant bacteria, facilitate the production of virulence factors (toxins) by the bacteria. Autoinducers have different structures from one strain to another. In particular, autoinducers produced by Gram-negative bacteria and those produced by Gram-positive bacteria have completely different structures. While autoinducers produced by Gram-negative bacteria are a compound called homoserine lactones, autoinducers produced by Gram-positive bacteria are cyclic oligopeptide.

Thus, attempts have been made to control bacteria's pathogenicity by adjusting the level of their autoinducers. In order to inhibit the action of autoinducers, Princeton University, University Technologies International Inc., and others proposed in 2003 a method using a substance structurally similar to autoinducers (i.e., analogue) (Patent Document 1) and Haptogen LTD., proposed in 2006 a method using autoinducer antibodies (Patent Document 2) to inhibit bacteria from producing toxins. These methods produce no selection pressure because they inhibit not the pathogenic bacteria's growth but the production of toxins only, so that they are gaining attention as possible therapeutic and preventive drugs for infectious diseases, which are less likely to result in the emergence of resistant bacteria. Further, some of the present inventors proposed the use of ethylene diamine tetraacetate (EDTA) to inhibit the toxin production by pathogenic bacteria (Patent Document 3). Further, Non-patent Document 1 discloses that the activity of polyphosphate kinase (PPK) is weakened by knocking out PPK genes to reduce the polyphosphate accumulation in pathogenic bacteria cells, thereby reducing the synthesis of autoinducers and inhibiting the production of virulence factors. The substances proposed in these patent documents are in fact effective, but they are difficult to use in actual medical practice.

### Prior Art Documents

### Patent Documents

Patent Document 1: JP 2003-532698 A
Patent Document 2: JP 2006-508910 A
Patent Document 3: JP 2010-095489 A

### Non-Patent Document

Non-Patent Document 1: M. Harunur Rashid et al., "Polyphosphate kinase is essential for biofilm development, quorum sensing, and virulence of Pseudomonas aeruginosa", PNAS, Vol. 97, No. 17, pp. 9636 to 9641, August 15, 2000.
From prior art disclosures, fibers having grafted thereon phosphate group-containing compound (see US5194454, JP2002105882 or JP2009091707), or a carboxylic acid group-containing compound (see US5071880, JP2004292956 or US20110078993) are known. However, they are produced either for filtering purposes (US5071880) or used as deodorizing fibers (JP2004292956, US20110078993) or as antiseptic fibers (US5194454).
JP2009287011 discloses a method for producing an inhibitory fiber able to remove verotoxin comprising: irradiating the fiber with an electron beam; and bringing it into contact with acrylic acid, in order to graft a carboxylic- acid group-containing compound to the fiber. The carboxylic acid groups grafted on the fibers being further reacted to introduce a carbohydrate compound for verotoxin. The patent fails to disclose the groups consisting of a phosphate group-containing compound, a carboxylic acid-containing compound and a ketone group-containing compound as the virulence factors production inhibitor.

### Disclosure of Invention

### Problem to be Solved by the Invention

With the foregoing in mind, the present invention provides the use of a fiber comprising an inhibitor of virulence factors production fixed to the fiber by chemical bonding as an inhibitory fiber against virulence factors production. The present description discloses an inhibitory fiber against virulence factors production comprising a fiber and a certain inhibitor of virulence factors production fixed to the fiber by chemical bonding, which can be used in actual medical practice. Methods for producing the inhibitory fiber against virulence factors production are also disclosed.

### Means for Solving Problem

The inhibitory fiber against virulence factors production of the present invention is an inhibitory fiber against virulence factors production comprising a fiber and an inhibitor of virulence factors production fixed to the fiber by chemical bonding. method comprises bringing an aqueous solution containing phosphoric acid and urea into contact with the cellulose fiber to chemically bond phosphoric ester to the cellulose fiber.

### Effects of the Invention

In the present invention, an inhibitor of virulence factors production (virulence factors production inhibitor) including at least one compound selected from the group consisting of a phosphate group-containing compound, a carboxylic acid group-containing compound, and a ketone group-containing compound is fixed to a fiber by chemical bonding. Thus, it is possible to provide an inhibitory fiber against virulence factors production having the capability of inhibiting production of virulence factors and usable in actual medical practice. Further, since the inhibitor of virulence factors production does not come off even when the fiber is washed, the fiber's inhibitory potency against virulence factors production is highly wash durable. Moreover, it is believed that the inhibitory fiber against virulence factors production of the present invention inhibits virulence factors production by inhibiting bacteria having quorum sensing capabilities, i.e., autoinducer-producing bacteria from producing autoinducers. Further, the inhibitory fiber against virulence factors production of the present invention also has virulence factors production-inhibiting effects on fungi. The production methods of the present invention allow introduction of an inhibitor of virulence factors production into a fiber such as a cellulose fiber in an efficient and rational manner.

### Brief Description of Drawings

[FIG. 1] FIG. 1 is a graph showing effects of fabrics of Examples and Comparative Example of the present invention on a viable bacterial count.
[FIG. 2] FIG. 2 is a graph showing effects of fabrics of Examples and Comparative Example of the present invention on an amount of pyocyanine produced (relative value).
[FIG. 3] FIG. 3 is a graph showing effects of fabrics of Examples and Comparative Example of the present invention on an amount of pyocyanine produced per viable bacterial count (relative value).

### Description of the Invention

In the present invention, an inhibitor of virulence factors production including at least one compound selected from the group consisting of a phosphate group-containing compound, a carboxylic acid group (carboxyl group)-containing compound, and a ketone group-containing compound is fixed to a fiber by chemical bonding. The phosphate group-containing compound is preferably one or more selected from the group consisting of phosphoric ester and phosphate. The carboxylic acid group-containing compound is preferably one or more selected from the group consisting of acrylate and iminodiacetate. The ketone group-containing compound is not particularly limited. However, it is preferable to use, for example, acetylacetone, benzoylacetone, diacetone and the like, and it is more preferably to use one or more selected from the group consisting of ethylene glycol monoacetoacetate monomethacrylate and diacetone acrylamide. The ratio of the inhibitor of virulence factors production to the fiber is preferably in a range of 0.01 to 3 mmol/g, and more preferably in a range of 0.1 to 1.5 mmol/g. The ratio within these ranges allows retention of the inhibitory potency against virulence factors production at a high level and does not impair the fiber's filling.

Fibers that can be used in the present invention are not particularly limited but are preferably, for example, cellulose fibers, polyethylene fibers, polypropylene fibers, nylon fibers, and polyvinylalcohol fibers compatible with electron beam graft polymerization. In particular, the fiber preferably includes a cellulose fiber, which may be, for example, a cotton, linen, rayon, or cupro fiber. It is preferable that a cellulose fiber makes up 10 to 100 mass% of the entire fiber. The fiber may be in any form such as a yarn, raw fiber, sliver, or fabric. Further, a fabric may be any fabric such as a woven fabric, knit fabric, or nonwoven fabric.

The first production method of the present invention comprises: irradiating a fiber with an electron beam; and bringing into contact with the fiber at least one compound selected from the group consisting of a phosphate group-containing compound, a carboxylic acid group-containing compound, and a ketone group-containing compound to chemically bond, preferably, graft bond the at least compound to the fiber. The electron beam irradiation step may be carried out before and/or after the step of bringing into contact with the fiber at least one compound selected from the group consisting of a phosphate group-containing compound, a carboxylic acid group-containing compound, and a ketone group-containing compound. In either case, the at least one compound can be chemically bonded to, preferably, graft bonded, to the fiber. Further, alkali neutralization treatment may be carried out as the next step. For the alkali neutralization treatment, it is preferable to use an aqueous solution of alkali metal hydroxide such as NaOH, KOH, or LiOH. It is also possible to omit the neutralization treatment by using sodium phosphate, sodium carboxylate, potassium phosphate or lithium phosphate in advance.

When using, for example, mono(2-methacryloyloxyethyl)phosphate (also known as acid phosphooxyethylmethacrylate; hereinafter referred to as "P1M") as a phosphate group-containing compound and applying P1M to a cellulose fiber, it is believed that electron beam irradiation allows P1M to graft bond to cellulose as shown in the formula (2) and/or (3) below, and phosphoric ester (phosphate) is formed by neutralization treatment, as shown in the following formula (4) and/or (5) below. 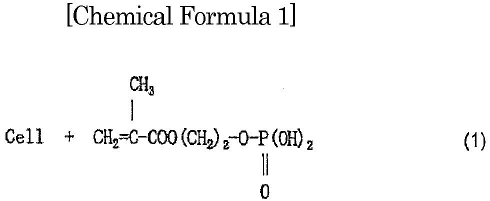 (where Cell represents cellulose; the same applies to the following) 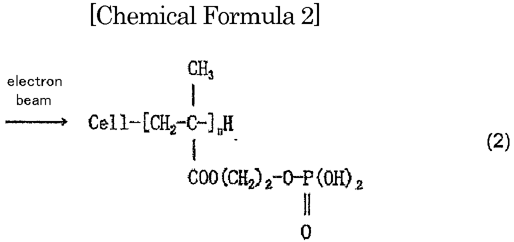 (where n is an integer of 1 or more; the same applies to the following) 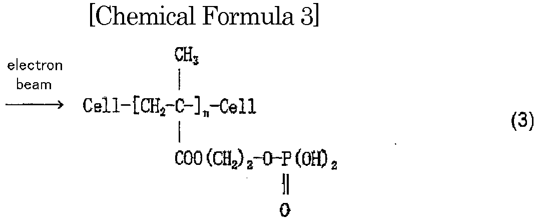 (where Cell... Cell represents that the compound ([CH₂-C-]ₙ) is bonded to cellulose inside the molecule; the same applies to the following)

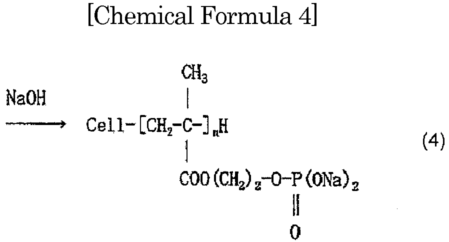

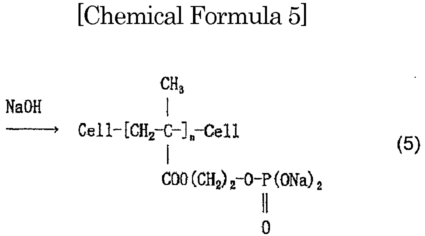

When using, for example, acrylic acid as a carboxylic acid group-containing compound and applying the acrylic acid to a cellulose fiber, it is believed that electron beam irradiation allows the acrylic acid to graft bond to cellulose as shown in the formula (7) and/or (8) below, and carboxylic ester (carboxylate) is formed by neutralization treatment, as shown in the formula (9) and/or (10) below.
[Chemical Formula 6]

Cell + CH₂=CH-COOH (6)

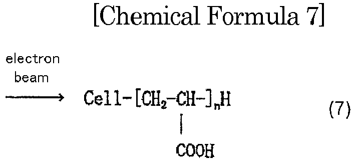

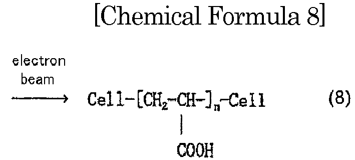

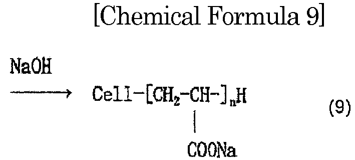

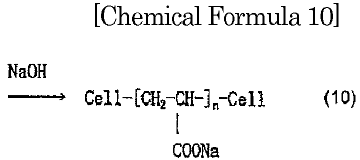

When graft bonding, for example, glycidyl methacrylate as a carboxylic acid group-containing compound to a cellulose fiber, introducing iminodiacetic acid (chelating group) and performing neutralization treatment, it is believed that electron beam irradiation allows the glycidyl methacrylate to graft bond to cellulose as shown in the formula (12) and/or (13) below, iminodiacetic acid (chelating group) is introduced as shown in the formula (14) and/or (15) below, and carboxylate (iminodiacetate) is formed by neutralization treatment, as shown in the formula (16) and/or (17) below.

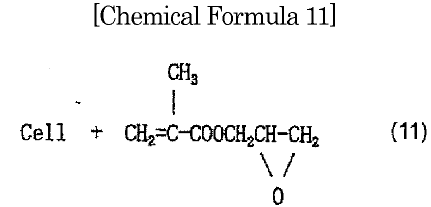

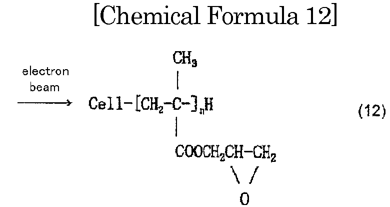

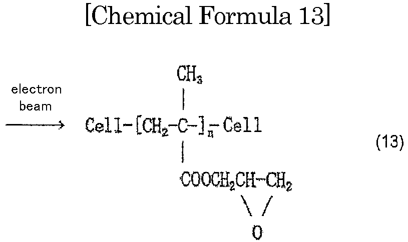

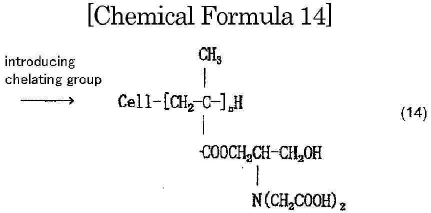

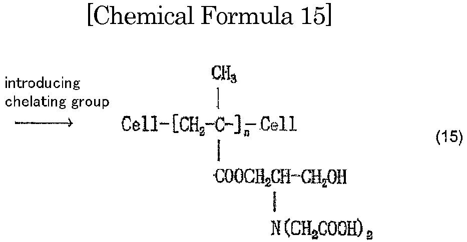

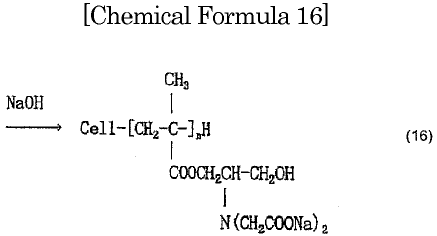

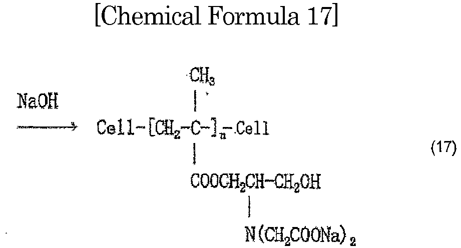

The second production method of the present invention comprises bringing an aqueous solution containing phosphoric acid and urea into contact with a cellulose fiber to chemically bond, preferably, to covalently bond phosphoric ester to the cellulose fiber. In terms of introducing phosphoric ester more effectively, chemical bonding, preferably, covalent bonding of phosphoric ester to the cellulose fiber is achieved by bringing an aqueous solution containing phosphoric acid and urea into contact with the cellulose fiber and heat curing the cellulose fiber. For example, a cellulose fiber (fabric) is padded with an aqueous solution containing phosphoric acid and urea (hereinafter simply referred also to as a phosphoric acid treatment solution) to covalently bond phosphoric ester to the cellulose fiber. For example, in one phosphoric acid treatment solution (100 mass%), 85 mass% phosphoric acid makes up 10 mass%, urea makes up 30 mass%, and water makes up the rest of the phosphoric acid treatment solution. At this time, the pH is preferably about 2.1. In another phosphoric acid treatment solution (100 mass%), 85 mass% phosphoric acid makes up 10 mass%, urea makes up 30 mass%, 28 mass% ammonium water makes up 8 mass%, and water makes up the rest of the phosphoric acid treatment solution. At this time, the pH is preferably about 6.5. The pH can be adjusted by using a given amount of ammonium water. It is preferable that the heat curing is carried out at 100 to 180°C for 0.5 to 5 minutes. By this treatment, for example, 0.1 mass% or more, preferably 2 to 8 mass%, particularly preferably 5 to 8 mass% of phosphoric ester can be covalently bonded to the cellulose fiber. Alkali naturalization may be carried out after the chemical bonding step.

A cellulose molecule is represented by the formula (18) below (where n is an integer of 1 or more). The cellulose molecule has highly reactive hydroxyl groups at C-2, C-3 and C-6 positions of glucose residue, and it is believed that phosphoric acid forms ester bonds with glucose residue at these sites. The formula (20) below shows an example where phosphoric acid forms an ester bond with glucose residue at C-2. In the formula (20), a -CH- group with which phosphoric acid forms an ester bond is a hydrocarbon group within a cellulose chain. Then, phosphate is formed by neutralization treatment as shown in the formula (21) below.

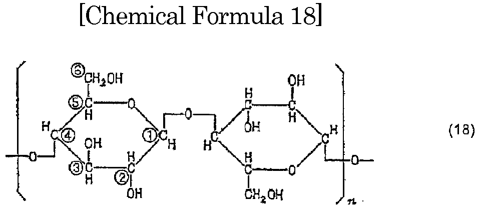

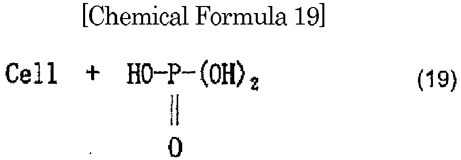

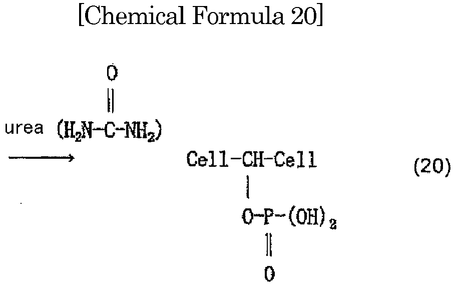

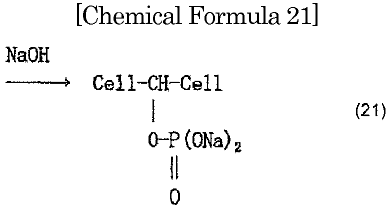

Alternatively, it is believed that phosphoric ester represented by the formulas (22) to (24) below may be formed. In the formula (22), the molar ratio between phosphorus and nitrogen is 1:1. The formulas (23) to (24) represent phosphorus-rich ester compounds and the compound represented by the formula (24) has a crosslinked structure. It is considered that when the compounds represented by the formulas (22) to (24) are washed with diluted hydrochloric acid or diluted alkali, nitrogen is released as ammonium.

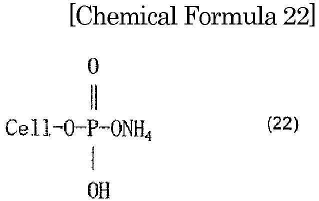

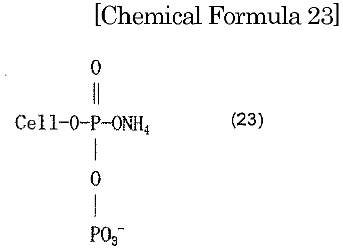

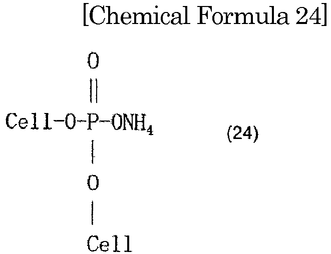

In the present invention, a combination of one or more compounds selected from the group consisting of a phosphate group-containing compound, a carboxylic acid group-containing compound, and a ketone group-containing compound may be bonded to a fabric, or fibers to which the respective compounds are bonded may be blended with each other to form a fabric.

It is believed that the inhibitory fiber against virulence factors production (fabric) of the present invention inhibits production of virulence factors by inhibiting bacteria having quorum sensing capabilities, i.e., autoinducer-producing bacteria from producing autoinducers. Although the phosphate group-containing compound, the carboxylic acid group-containing compound, and/or the ketone group-containing compound bonded to the cellulose fiber have only a moderate ionic strength and are thus poor in bactericidal activity, the fiber is highly capable of inhibiting production of virulence factors by inhibiting bacteria from producing autoinducers. Specifically, by using the chelating effects of the phosphate group-containing compound, the carboxylic acid group-containing compound, and/or the ketone group-containing compound (molecule) bonded to a fiber such as a cellulose fiber, magnesium is removed, weakening the activity of PPK, so that the accumulation of polyphosphoric acid in bacteria cells is prevented and the production of autoinducers is inhibited. As a result, it is believed that the production of virulence factors is inhibited. That is, autoinducers are targeted for the purpose of reducing the production of virulence factors (toxins). Thus, the chances of emergence of treatment-resistant strains are significantly small. For these reasons, the inhibitory fiber against virulence factors production of the present invention can be applied to all of virulence bacteria having quorum sensing capabilities, and can be applied to both Gram-negative and Gram-positive bacteria. Further, since the inhibitory fiber against virulence factors production of the present invention also has virulence factors production-inhibiting effects on fungi, it can also be applied to virulence fungi.

Examples of virulence bacteria having quorum sensing capabilities include Actinobacillus actinomycetemcomitans, Acinetobacter baumannii, Bordetella pertussis, Brucella sp., Campylobacter sp., Capnocytophaga sp., Cardiobacterium hominis, Eikenella corrodens, Francisella tularensis, Haemophilus ducreyi, Haemophilus influenzae, Helicobacter pylori, Kingella kingae, Legionella pneumophila, Pasteurella multocida, Citrobacter sp., Enterobacter sp., Escherichia coli, Klebsiella pneumoniae, Proteus sp., Salmonella enteriditis, Salmonella typhi, Serratia marcescens, Shigella sp., Yersinia enterocolitica, Yersinia pestis, Neisseria gonorrhoeae, Neisseria meningitidis, Moraxella catarrhalis, Veillonella sp., Bacteroides fragilis, Bacteroides sp., Prevotella sp., Fusobacterium sp., Spirillum minus, Aeromonas sp., Plesiomonas shigelloides, Vibrio cholerae, Vibrio parahaemolyticus, Vibrio vulnificus, Acinetobacter sp., Flavobacterium sp., Pseudomonas aeruginosa, Burkholderiacepacia, Burkholderia pseudomallei, Xanthomonas maltophilia, Stenotrophomonas maltophila, Staphylococcus aureus, Bacillus spp., Clostridium spp., Lesteria monocytogenes, and Streptococcus spp. Examples of virulence fungi include Trichophyton, candida, and aspergilloma. The inhibitory fiber against virulence factors production of the present invention has mycelial formation inhibiting effects on Trichophyton.

### Examples

Hereinafter, the present invention will be described in more detail by way of the following Examples. It should be noted that the present invention is not limited to the following Examples.

### (Example 1)

In this Example, a phosphate group-containing compound (hereinafter also referred to as a phosphorus compound) was bonded to a cellulose fiber of a fabric by the Pad method. This Example corresponds to the cases represented by the formulas (1) to (5) above. By using an electron curtain type electron beam irradiator (EC 250/30/90L; manufactured by Eye Electron Beam Co., Ltd.), one side of a mercerized medium-thick fabric made from 100% cotton fiber (unit weight: 300 g/m²) was irradiated with electron beams in a nitrogen gas atmosphere at an acceleration voltage of 200 kV, and an exposure of 40 kGy. The fabric irradiated with electron beams was immersed into a 10 mass% P1M [mono(2-methacryloyloxyethyl)phosphate; manufactured by Kyoeisha Chemical Co., Ltd.] aqueous solution, squeezed with a mangle until a pick up of about 70 mass% was achieved, and then was left standing overnight at 35°C. To remove unreacted and adhered monomers from the fabric left standing overnight, the fabric was washed with hot water and then with water. Thereafter, the fabric was squeezed with the mangle, and then was dried in a pin tenter at 150°C for 90 seconds. The amount of phosphate group introduced per mass of fiber, which was calculated from the difference in mass of the fabric before and after the above process and the molecular weight of P1M, was 0.22 mmol/g.

### (Neutralization treatment)

Next, the phosphate group-introduced fabric was left standing overnight in a 1g/L sodium hydroxide aqueous solution at ambient temperature to substitute the phosphate group for sodium phosphate. To remove excess sodium hydroxide, the fabric was washed with hot water and then with water. Subsequently, the fabric was squeezed with the mangle, and was dried in the pin tenter at 150°C for 90 seconds. The fabric obtained was used as an evaluation sample (Sample 2).

### (Example 2)

In this Example, the Pad method as used in Example 1 was replaced with a dipping method. A10 mass% P1M aqueous solution was nitrogen bubbled in advance to adjust the solution's dissolved oxygen concentration to 0.1 ppm or less. By using an electron curtain type electron beam irradiator (EC 250/30/90L; manufactured by Eye Electron Beam Co., Ltd.), one side of a mercerized medium-thick fabric made from 100% cotton fiber (unit weight: 300 g/m²) was irradiated with electron beams in a nitrogen gas atmosphere at an acceleration voltage of 200 kV, and an exposure of 40 kGy. The fabric irradiated with electron beams was immersed into the 10 mass% P1M aqueous solution prepared as above having a dissolved oxygen concentration of 0.1 ppm or less (bath ratio about 1:15). After sealing the container, the fabric was left standing for one hour at 50°C and then overnight at 35°C. To remove unreacted and adhered monomers from the fabric left standing overnight, the fabric was washed with hot water and then with water. Thereafter, the fabric was squeezed with a mangle, and then was dried in a pin tenter at 150°C for 90 seconds. The amount of phosphate group introduced per mass of fiber, which was calculated from the difference in mass of the fabric before and after the above process and the molecular weight of P1M, was 1.6 mmol/g.

### (Neutralization treatment)

Next, the phosphate group-introduced fabric was left standing overnight in a 3g/L sodium hydroxide aqueous solution at ambient temperature to substitute the phosphate group for sodium phosphate. To remove excess sodium hydroxide, the fabric was washed with hot water and then with water. Subsequently, the fabric was squeezed with the mangle, and was dried in the pin tenter at 150°C for 90 seconds. The fabric obtained was used as an evaluation sample (Sample 3).

### (Example 3)

In this Example, acrylic acid was used as a carboxylic acid group-containing compound and was bonded to a cellulose fiber of a fabric by the Pad method. This Example corresponds to the cases represented by the formulas (6) to (10) above. By using an electron curtain type electron beam irradiator (EC 250/30/90L; manufactured by Eye Electron Beam Co., Ltd.), one side of a mercerized medium-thick fabric made from 100% cotton fiber (unit weight: 300 g/m²) was irradiated with electron beams in a nitrogen gas atmosphere at an acceleration voltage of 200 kV, and an exposure of 40 kGy. The fabric irradiated with electron beams was immersed into a 10 mass% acrylic acid (manufactured by Nacalai Tesque, Inc.) aqueous solution, squeezed with a mangle until a pick up of about 70 mass% was achieved, and then was left standing overnight at 35°C. To remove unreacted and adhered monomers from the fabric left standing for overnight, the fabric was washed with hot water and then with water. Thereafter, the fabric was squeezed with the mangle, and then was dried in a pin tenter at 150°C for 90 seconds. The amount of carboxyl group introduced per mass of fiber, which was calculated from the difference in mass of the fabric before and after the above process and the molecular weight of acrylic acid, was 1.12 mmol/g.

### (Neutralization treatment)

Next, the carboxyl group-introduced fabric was left standing overnight in a 1g/L sodium hydroxide aqueous solution at ambient temperature to substitute the carboxyl group for sodium carboxylate. To remove excess sodium hydroxide, the fabric was washed with hot water and then with water. Subsequently, the fabric was squeezed with the mangle, and was dried in the pin tenter at 150°C for 90 seconds. The fabric obtained was used as an evaluation sample (Sample 4).

### (Example 4)

In this Example, a carboxylic acid group-containing compound was bonded to a cellulose fiber of a fabric by the Pad method. This Example corresponds to the cases represented by the formulas (11) to (17) above. By using an electron curtain type electron beam irradiator (EC 250/30/90L; manufactured by Eye Electron Beam Co., Ltd.), one side of a mercerized medium-thick fabric made from 100% cotton fiber (unit weight: 300 g/m²) was irradiated with electron beams in a nitrogen gas atmosphere at an acceleration voltage of 200 kV, and an exposure of 40 kGy. The fabric irradiated with electron beams was immersed into an aqueous solution containing 10 mass% glycidyl methacrylate (manufactured by Nacalai Tesque, Inc.) and 0.5 mass% Tween 20 (manufactured by Nacalai Tesque, Inc.), squeezed with a mangle until a pick up of about 70 mass% was achieved, and then was left standing overnight at 35°C. To remove unreacted and adhered monomers from the fabric left standing overnight, the fabric was washed with hot water and then with water. Thereafter, the fabric was squeezed with the mangle, and then was dried in a pin tenter at 150°C for 90 seconds. The amount of epoxy group introduced per mass of fiber, which was calculated from the difference in mass of the fabric before and after the above process and the molecular weight of glycidyl methacrylate, was 0.34 mmol/g.

### (Introduction of chelating group)

The epoxy group-introduced fabric was left standing overnight in a 2.5 mass% iminodiacetic acid (manufactured by Nacalai Tesque, Inc.) aqueous solution at 35°C to introduce a chelating group into the fabric. To remove excess iminodiacetic acid, the fabric was washed with hot water and then with water. Subsequently, the fabric was squeezed with the mangle and was dried in the pin tenter at 150°C for 90 seconds.

### (Neutralization treatment)

Next, the chelating group-introduced fabric was left standing overnight in a 3g/L sodium hydroxide aqueous solution at ambient temperature to substitute the iminodiacetic adic for sodium diiminoacetate. To remove excess sodium hydroxide, the fabric was washed with hot water and then with water. Subsequently, the fabric was squeezed with the mangle, and was dried in the pin tenter at 150°C for 90 seconds. The fabric obtained was used as an evaluation sample (Sample 5).

### (Example 5)

In this Example, the Pad method as used in Example 4 was replaced with a dipping method. An aqueous solution containing 10 mass% glycidyl methacrylate (manufactured by Nacalai Tesque, Inc.) and 0.5 mass% Tween 20 (manufactured by Nacalai Tesque, Inc.) was nitrogen bubbled in advance to adjust the solution's dissolved oxygen concentration to 0.1 ppm or less. By using an electron curtain type electron beam irradiator (EC 250/30/90L; manufactured by Eye Electron Beam Co., Ltd.), one side of a mercerized medium-thick fabric made from 100% cotton fiber (unit weight: 300 g/m²) was irradiated with electron beams in a nitrogen gas atmosphere at an acceleration voltage of 200 kV, and an exposure of 40 kGy. The fabric irradiated with electron beams was immersed into the aqueous solution prepared as above containing 10 mass% glycidyl methacrylate and 0.5 mass% Tween 20 and having a dissolved oxygen concentration of 0.1 ppm or less (bath ratio about 1:15). After sealing the container, the fabric was left standing for one hour at 50°C and then overnight at 35°C. To remove unreacted and adhered monomers from the fabric left standing overnight, the fabric was washed with hot water and then with water. Thereafter, the fabric was squeezed with a mangle, and then was dried in a pin tenter at 150°C for 90 seconds. The amount of epoxy group introduced per mass of fiber, which was calculated from the difference in mass of the fabric before and after the above process and the molecular weight of glycidyl methacrylate, was 2.6 mmol/g.

### (Introduction of chelating group)

The epoxy group-introduced fabric was left standing overnight in a 2.5 mass% iminodiacetic acid (manufactured by Nacalai Tesque, Inc.) aqueous solution at 35°C to introduce a chelating group into the fabric. To remove excess iminodiacetic acid, the fabric was washed with hot water and then with water. Subsequently, the fabric was squeezed with the mangle and was dried in the pin tenter at 150°C for 90 seconds.

### (Neutralization treatment)

Next, the chelating group-introduced fabric was left standing overnight in a 3g/L sodium hydroxide aqueous solution at ambient temperature to substitute the iminodiacetic acid for sodium iminodiacetate. To remove excess sodium hydroxide, the fabric was washed with hot water and then with water. Subsequently, the fabric was squeezed with the mangle, and was dried in the pin tenter at 150°C for 90 seconds. The fabric obtained was used as an evaluation sample (Sample 6).

Table 1 provides each sample's inhibitor of virulence factors production (hereinafter simply referred also to as inhibitor) concentration. In Table 1, Sample 1 is an untreated article (mercerized medium-thick fabric made from 100% cotton fiber, unit weight: 300 g/m²) and corresponds to Comparative Example. It should be noted that the effective inhibitor concentration (mM) in Table 1 is an inhibitor concentration when 1 ml of bacterial suspension was inoculated into about 0.4 g of fabric.

**[TABLE 1]**

| Sample No. | Effective inhibitor concentration | |
|---|---|---|
| | mmol/g | mM |
| Sample 1: untreated | 0 | 0 |
| Sample 2: phosphoric ester | 0.22 | 88 |
| Sample 3: phosphoric ester | 1.6 | 640 |
| Sample 4: acrylate | 1.12 | 448 |
| Sample 5: carboxylate | 0.34 | 136 |
| Sample 6: carboxylate | 2.6 | 1040 |

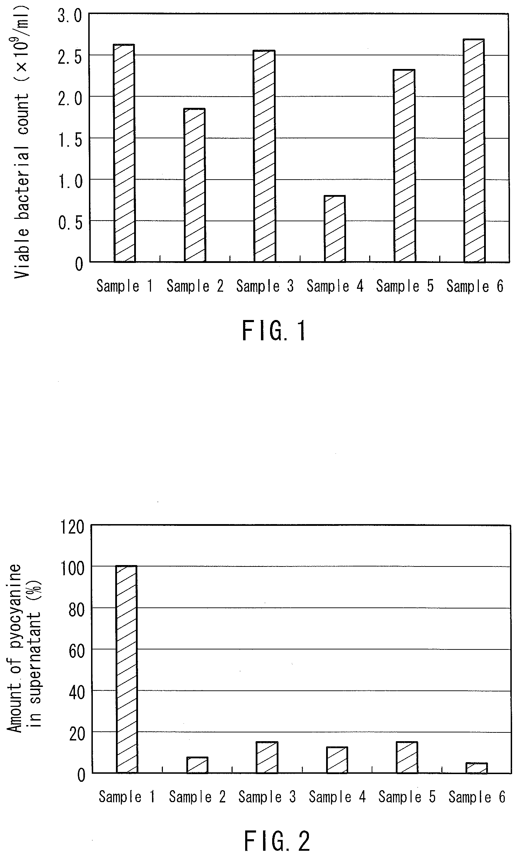

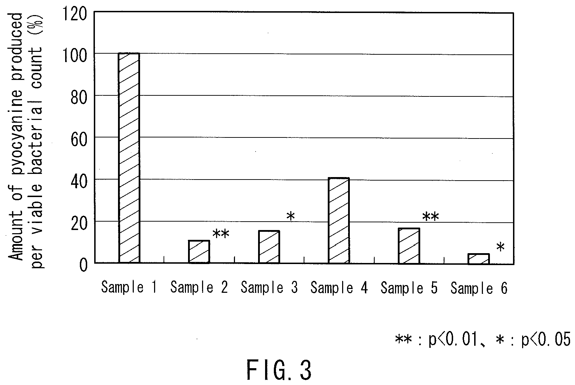

After sterilizing in an autoclave each of the test pieces (0.4 g) obtained from Samples 1 to 6, 1 mL of bacterial suspension of Pseudomonas aeruginosa (PA 01 strain), whose bacterial concentration was adjusted to 2.7 × 10³ bacteria/mL in a Luria-Bertani culture medium (LB culture medium), was inoculated into each test piece. After statically culturing the bacterium at 37°C for 96 hours, the culture solution absorbed by each test piece was recovered centrifugally (4,000 rpm, 2 minutes). Further, each culture solution was centrifuged (14,000 rpm, 2 minutes), and a supernatant obtained (0.4 mL) was used in determining the amount of pyocyanine produced. The volume of the remaining fraction was fixed to 20 mL using physiological saline, and a part thereof was seeded in a LB agar medium to calculate the viable bacterial count. Pyocyanine was extracted using chloroform, dissolved in 0.2 M HCl, and quantified by measuring the absorbance (wavelength: 490 nm) of the pyocyanine-dissolved HCl. The measurement was performed five times (n = 5), and an average value was calculated. The results are shown in Table 2 and FIGS. 1 to 3.

**[TABLE 2]**

| Sample No. | Viable bacterial count (×10⁹ bacteria/ml) | Pyocyanine | | Amount of pyocyanine produced per viable bacterial count Relative value (%) |
|---|---|---|---|---|
| | | Quantitative value | Relative value (%) | |
| Sample 1: untreated | 2.62 | 0.01333 | 100.0 | 100.0 |
| Sample 2: phosphoric ester | 1.85 | 0.00100 | 7.5 | 10.6 |
| Sample 3: phosphoric ester | 2.55 | 0.00200 | 15.0 | 15.4 |
| Sample 4: acrylate | 0.80 | 0.00167 | 12.5 | 40.9 |
| Sample 5: carboxylate | 2.32 | 0.00200 | 15.0 | 16.9 |
| Sample 6: carboxylate | 2.69 | 0.00067 | 5.0 | 4.9 |

As is clear from Table 2 and FIGS. 1 to 3, no difference was seen between the fabrics obtained in Examples 1 to 5 and the untreated fabric in terms of viable bacterial count after the culturing, but the quantitative and relative values of pyocyanine and the amount of pyocyanine produced per viable bacterial count (relative value) were small in the fabrics of Examples 1 to 5, demonstrating that they had the inhibitory potency against virulence factors production.

### (Example 6)

### <Introduction of phosphoric ester>

A mercerized thin fabric made from 100% cotton fiber (unit weight: 140 g/m²) was immersed into an aqueous solution containing 13.6 mass% phosphoric acid (manufactured by Nacalai Tesque, Inc.) and 41 mass% urea (manufactured by Nacalai Tesque, Inc.), squeezed with a mangle until a pick up of about 70 mass% was achieved, and was dried in a pin tenter at 150°C for 150 seconds. The dried fabric was washed with hot water and then with water sufficiently, squeezed with the mangle, and dried in the pin tenter at 150°C for 90 seconds. The amount of phosphate group introduced per mass of fiber, which was calculated from the difference in mass of the fabric before and after the above process and the molecular weight of phosphoric acid, was 0.38 mmol/g.

### (Neutralization treatment)

Next, the phosphoric ester-introduced fabric was immersed into a 5 mass% sodium hydroxide (manufactured by Nacalai Tesque, Inc.) aqueous solution and then was squeezed with the mangle until a pick up of about 70 mass% was achieved. To remove excess sodium hydroxide, the fabric was washed with hot water and then with water. Subsequently, the fabric was squeezed with the mangle and was dried in the pin tenter at 150°C for 90 seconds. The fabric obtained was used as Sample B1.

### (Example 7)

### <Introduction of phosphoric ester>

A mercerized thin fabric made from 100% cotton fiber (unit weight: 140 g/m²) was immersed into an aqueous solution containing 13.6 mass% phosphoric acid (manufactured by Nacalai Tesque, Inc.) and 41 mass% urea (manufactured by Nacalai Tesque, Inc.), squeezed with a mangle until a pick up of about 70 mass% was achieved, and was dried in a pin tenter at 150°C for 90 seconds. Further, the fabric was cured in the pin tenter at 165°C for 105 seconds. The cured fabric was washed with hot water and then with water sufficiently, squeezed with the mangle, and was dried in the pin tenter at 150°C for 90 seconds. The amount of phosphate group introduced per mass of fiber, which was calculated from the difference in mass of the fabric before and after the above process and the molecular weight of phosphoric acid, was 0.71 mmol/g. In Example 7, the amount of phosphate group introduced was larger than that in Example 6.

### (Neutralization treatment)

Next, the phosphoric ester-introduced fabric was immersed into a 5 mass% sodium hydroxide (manufactured by Nacalai Tesque, Inc.) aqueous solution and then was squeezed with the mangle until a pick up of about 70 mass% was achieved. To remove excess sodium hydroxide, the fabric was washed with hot water and then with water. Subsequently, the fabric was squeezed with the mangle and was dried in the pin tenter at 150°C for 90 seconds. The fabric obtained was used as Sample B2.

### (Example 8)

An inhibitory fiber against virulence factors production was produced in the same manner as in Example 6 except for using a mercerized thin fabric made from a mixture of 65% polyester fiber and 35% cotton fiber (unit weight: 120 g/m²; hereinafter referred also to as a T/C fabric) in place of a mercerized thin fabric made from 100% cotton fiber. In Example 8, the amount of phosphate group introduced per mass of fiber was 0.37 mmol/g. The fabric obtained in Example 8 was used as Sample B3.

### (Example 9)

An inhibitory fiber against virulence factors production was produced in the same manner as in Example 7 except for using a mercerized thin fabric made from a mixture of 65% polyester fiber and 35% cotton fiber (unit weight: 120 g/m²) in place of a mercerized thin fabric made from 100% cotton fiber. In Example 9, the amount of phosphate group introduced per mass of fiber was 0.40 mmol/g. The fabric obtained in Example 9 was used as Sample B4.

### (Example 10)

An aqueous solution containing 5 mass% EGMM (ethylene glycol monoacetoacetate monomethacrylate) (manufactured by Tokyo Chemical Industry Co., Ltd.) and 0.5 mass% Tween 20 (manufactured by Nacalai Tesque, Inc.) was nitrogen bubbled in advance to adjust the solution's dissolved oxygen concentration to 0.1 ppm or less. By using an electron curtain type electron beam irradiator (EC 250/30/90L; manufactured by Eye Electron Beam Co., Ltd.), one side of a mercerized thin fabric made from 100% cotton fiber (unit weight: 140 g/m²) was irradiated with electron beams in a nitrogen gas atmosphere at an acceleration voltage of 200 kV, and an exposure of 40 kGy. The fabric irradiated with electron beams was immersed into the aqueous solution prepared as above containing 5 mass% EGMM and 0.5 mass% Tween 20 and having a dissolved oxygen concentration of 0.1 ppm or less (bath ratio about 1:15). After sealing the container, a reaction was allowed to occur at 50°C for two hours. After the reaction, the fabric was washed with hot water and then with water to remove unreacted and adhered monomers from the fabric. Subsequently, the fabric was squeezed with a mangle, and then was dried in a pin tenter at 150°C for 90 seconds. The amount of ketone group-containing compound introduced per mass of fiber, which was calculated from the difference in mass of the fabric before and after the above process and the molecular weight of EGMM, was 1.10 mmol/g. The fabric obtained in Example 10 was used as Sample B5.

### (Example 11)

A5 mass% DAA (diacetone acrylamide) (manufactured by Nippon Kasei Chemical Co., Ltd.) aqueous solution was nitrogen bubbled in advance to adjust the solution's dissolved oxygen concentration to 0.1 ppm or less. By using an electron curtain type electron beam irradiator (EC 250/30/90L; manufactured by Eye Electron Beam Co., Ltd.), one side of a mercerized thin fabric made from 100% cotton fiber (unit weight: 140 g/m²) was irradiated with electron beams in a nitrogen gas atmosphere at an acceleration voltage of 200 kV, and an exposure of 40 kGy. The fabric irradiated with electron beams was immersed into the 5 mass% DAA aqueous solution prepared as above having a dissolved oxygen concentration of 0.1 ppm or less (bath ratio about 1:10). After sealing the container, a reaction was allowed to occur at 50°C for two hours. After the reaction, the fabric was washed with hot water and then with water to remove unreacted and adhered monomers from the fabric. Subsequently, the fabric was squeezed with a mangle, and then was dried in a pin tenter at 150°C for 90 seconds. The amount of ketone group-containing compound introduced per mass of fiber, which was calculated from the difference in mass of the fabric before and after the above process and the molecular weight of DAA, was 1.45 mmol/g. The fabric obtained in Example 11 was used as Sample B6.

### (Example 12)

An aqueous solution containing 10.9 mass% P1M-Na (P1M-Na being obtained by neutralizing P1M with a sodium hydroxide aqueous solution in advance) was nitrogen bubbled in advance to adjust the solution's dissolved oxygen concentration to 0.1 ppm or less. By using an electron curtain type electron beam irradiator (EC 250/30/90L; manufactured by Eye Electron Beam Co., Ltd.), a viscose rayon raw fiber (manufactured by OmiKenshi Co., Ltd., fineness: 3.3 dtex, fiber length: 51 mm) was irradiated with electron beams in a nitrogen gas atmosphere at an acceleration voltage of 250 kV, and an exposure of 40 kGy. The viscose rayon raw fiber irradiated with electron beams was immersed into the 10.9 mass% P1M-Na aqueous solution prepared as above having a dissolved oxygen concentration of 0.1 ppm or less (bath ratio about 1:10). After sealing the container, a reaction was allowed to occur at ambient temperature for two to three hours. After the reaction, the raw fiber fabric was washed with hot water and then with water to remove unreacted and adhered monomers from the fabric. Subsequently, the fabric was squeezed with a mangle, and then was air dried with an air dryer. The amount of phosphate group introduced per mass of fiber, which was calculated from the difference in mass of the fabric before and after the above process and the molecular weight of P1M-Na, was 0.89 mmol/g. The fabric obtained was used as Sample B7.

### (Example 13)

A mercerized thin fabric made from 100% cotton fibers (unit weight: 140 g/m²) was immersed into an aqueous solution containing 8.5 mass% phosphoric acid (manufactured by Nacalai Tesque, Inc.) and 30 mass% urea (manufactured by Nacalai Tesque, Inc.), squeezed with a mangle until a pick up of about 70 mass% was achieved, and was dried in a pin tenter at 150°C for 90 seconds. Further, the fabric was cured in the pin tenter at 165°C for 105 seconds. The cured fabric was washed with hot water and then with water sufficiently, squeezed with the mangle, and was dried in the pin tenter at 150°C for 90 seconds. The amount of phosphate group introduced per mass of fiber, which was calculated from the difference in mass of the fabric before and after the above process and the molecular weight of phosphoric acid, was 0.54 mmol/g.

### (Neutralization treatment)

Next, the phosphoric ester-introduced fabric was immersed into a 1 mass% sodium hydroxide (manufactured by Nacalai Tesque, Inc.) aqueous solution and then was squeezed with the mangle until a pick up of about 70 mass% was achieved. To remove excess sodium hydroxide, the fabric was washed with hot water and then with water. Subsequently, the fabric was squeezed with the mangle and was dried in the pin tenter at 150°C for 90 seconds. The fabric obtained was used as Sample B8.

Virulence factors production-inhibiting effects of the fabrics obtained in Examples 6 to 13 (Samples B1 to B8) were examined. A mercerized thin fabric made from 100% cotton fiber was used as Control Sample 1 and a mercerized thin fabric made from a mixture of 65% polyester fiber and 35% cotton fiber was used as Control Sample 2. A viscose rayon raw fiber (manufactured by OmiKenshi Co., Ltd., fineness: 3.3 dtex, fiber length: 51 mm), which had been washed with hot water and then with water to remove an influence of oil and then dried, was used as Control Sample 3.

For the fabrics obtained in Examples 6 to 9 and 13, whether their virulence factors production-inhibiting effects were wash durable was examined. In accordance with JIS L 0217 103, the fabrics of Examples 6 to 9 were washed 10 times and the fabric of Example 13 was washed predetermined times with a JAFET detergent instead of the specified detergent. After being washed, the fabrics were hung and air dried.

### <Evaluation method>

After autoclaving each of the test pieces (0.4 g) obtained from the Samples, 1 mL of bacterial suspension of Pseudomonas aeruginosa (PA 01 strain), whose bacterial concentration was adjusted to 2.7 × 10³ bacteria/mL in a Luria-Bertani culture medium (LB culture medium), was inoculated into each of the test pieces. After statically culturing the bacterium at 37°C for 48 hours, the culture solution that each test piece absorbed was recovered centrifugally (7,840 rpm, 5 minutes). Further, each culture solution was centrifuged (14,000 rpm, 2 minutes), and a supernatant obtained (0.4 mL) was used in determining the amount of pyocyanine produced. The volume of centrifugally precipitated cell body fraction was fixed to 20 mL using physiological saline, and a part thereof was used in determining the absorbance (wavelength 570nm) and the viable bacterial count was calculated. Pyocyanine was extracted using chloroform, dissolved in 0.2 M HCl, and quantified by measuring the absorbance (wavelength 490 nm) of the pyocyanine-dissolved HCl. For the evaluation of the fiber of Example 13 (Sample B8), multidrug-resistant Pseudomonas aeruginosa (JCM14847) was used in place of Pseudomonas aeruginosa (PA 01 strain). The measurement was performed five times (n = 5), and an average value was calculated. Tables 3 to 7 provide the results.

**[TABLE 3]**

| | Viable bacterial count (×10⁹ bacteria/mL) | Amount of pyocyanine produced per viable bacterial count Relative value (%) |
|---|---|---|
| Control Sample 1: untreated | 3.49 | 100.0 |
| Sample B1: phosphoric ester (0.38 mmol/g) | 6.14 | 8.8 |
| Sample B2: phosphoric ester (0.71 mmol/g) | 8.53 | 0.0 |

**[TABLE 4]**

| | Viable bacterial count (×10⁹ bacteria/mL) | Amount of pyocyanine produced per viable bacterial count Relative value (%) |
|---|---|---|
| Control Sample 2: untreated | 3.78 | 100.0 |
| Sample B3: phosphoric ester (0.37 mmol/g) | 4.68 | 44.8 |
| Sample B4: phosphoric ester (0.40 mmol/g) | 8.71 | -1.3 |

**[TABLE 5]**

| | Viable bacterial count (×10⁹ bacteria/mL) | Amount of pyocyanine produced per viable bacterial count Relative value (%) |
|---|---|---|
| Control Sample 1: untreated | 2.78 | 100.0 |
| Sample B5: compound containing two ketone groups (1.10 mmol/g) | 2.05 | 22.7 |
| Sample B6: compound containing one ketone group (1.45 mmol/g) | 3.01 | 6.6 |

**[TABLE 6]**

| | Viable bacterial count (×10⁹ bacteria/mL) | Amount of pyocyanine produced per viable bacterial count Relative value (%) |
|---|---|---|
| Control Sample 3: untreated | 3.59 | 100.0 |
| Sample B7: phosphoric ester (0.89 mmol/g) | 6.22 | 6.8 |

**[TABLE 7]**

| | | Viable bacterial count (×10⁹ bacteria/mL) | Amount of pyocyanine produced per viable bacterial count Relative value (%) |
|---|---|---|---|
| Control Sample 1 untreated | Number of times washed 0 | 2.69 | 100.0 |
| | Number of times washed 10 | 3.50 | 43.8 |
| | Number of times washed 50 | 3.19 | 32.1 |
| Sample B8 phosphoric ester (0.54mmol/g) | Number of times washed 0 | 6.01 | 4.4 |
| | Number of times washed 10 | 4.91 | 9.1 |
| | Number of times washed 50 | 2.41 | 27.1 |

From Tables 3 to 7 above, the following were found.
(1) From Table 3, it was found that the phosphoric ester-introduced fabrics of Examples 6 to 7, both of which were made from 100% cotton fiber and washed, were not different from the untreated fabric in terms of viable bacterial count after the culturing, but the amount of pyocyanine produced per viable bacterial count (relative value) was small in both cases, demonstrating that their inhibitory potency against virulence factors production was wash durable.
(2) From Table 4, it was found that the phosphoric-ester introduced T/C fabrics of Examples 8 to 9, which were washed, were not different from the untreated fabric in terms of viable bacterial count after the culturing, but the amount of pyocyanine produced per viable bacterial count (relative value) was small in both cases, demonstrating that their inhibitory potency against virulence factors production was wash durable.
(3) From Table 5, it was found that the fabrics of Examples 10 to 11, to which a ketone-containing compound was fixed by chemical bonding, were not different from the untreated fabric in terms of viable bacterial count after the culturing, but the amount of pyocyanine produced per viable bacterial count (relative value) was small in both cases, demonstrating their inhibitory potency against virulence factors production.
(4) From Table 6, it was found that the treated rayon raw fiber of Example 12, into which a phosphate group-containing compound was introduced, was not different from the untreated fabric in terms of viable bacterial count after the culturing, but the amount of pyocyanine produced per viable bacterial count (relative value) was small, demonstrating its inhibitory potency against virulence factors production.
(5) With regard to effects of the 100% cotton fiber fabric of Example 13 on multidrug-resistant Pseudomonas aeruginosa, it was found from Table 7 that the fabric was not different from the untreated fabric in terms of viable bacterial count after the culturing, but the amount of pyocyanine produced per viable bacterial count (relative value) was small, demonstrating that its inhibitory potency against virulence factors production was wash durable.

### (Example 14)

A mercerized thin fabric made from 100% cotton fiber (unit weight: 140 g/m²) was immersed into an aqueous solution containing 8.5 mass% phosphoric acid (manufactured by Nacalai Tesque, Inc.) and 30 mass% urea (manufactured by Nacalai Tesque, Inc.), squeezed with a mangle until a pick up of about 70 mass% was achieved, and was dried in a pin tenter at 150°C for 90 seconds. Further, the fabric was cured in the pin tenter at 165°C for 105 seconds. The cured fabric was washed with hot water and then with water sufficiently, squeezed with the mangle, and was dried in the pin tenter at 150°C for 90 seconds. The amount of phosphate group introduced per mass of fiber, which was calculated from the difference in mass of the fabric before and after the above process and the molecular weight of phosphoric acid, was 0.54 mmol/g.

### (Neutralization treatment)

Next, the phosphoric ester-introduced fabric was immersed into a 1 mass% sodium hydroxide (manufactured by Nacalai Tesque, Inc.) aqueous solution and then was squeezed with the mangle until a pick up of about 70 mass% was achieved. To remove excess sodium hydroxide, the fabric was washed with hot water and then with water. Subsequently, the fabric was squeezed with the mangle and was dried in the pin tenter at 150°C for 90 seconds. The fabric obtained was used as Sample C1.

Virulence factors production-inhibiting effects of the fabric obtained in Example 14 (Sample C1) on Listeria monocytogenes, Staphylococcus aureus, and Escherichia coli 0157 were examined based on the following evaluation method. Tables 8 to 10 provide the results. An untreated mercerized thin fabric made from 100% cotton fiber was used as Control Sample C1.

### < Virulence factors production-inhibiting effects on Listeria monocytogenes>

Listeria monocytogenes cultured in brain heart infusion broth (manufactured by Becton, Dickinson and Company) for 4 hours was collected centrifugally (7,500 rpm, 2 minutes), and the collected bacterium was suspended in a RPMI1640 culture medium (manufactured by Nacalai Tesque, Inc.) such that the bacterial concentration was 10 times larger than that of the original culture medium. 1 mL of the bacterial suspension (bacterial concentration: 2.7 × 10⁴ bacteria/mL) was inoculated into each autoclaved test piece (0.7 g). After statically culturing the bacterium at 37°C for 24 hours, the culture solution that each test piece absorbed was recovered centrifugally (7,840 rpm, 5 minutes). A supernatant obtained was ultrafiltered (elimination size: 30kDa) to concentrate the supernatant by 20 times, and 0.1 mL of the concentrated supernatant was used in determining the hemolysis activity. The volume of centrifugally precipitated cell body fraction was fixed to 20 mL using physiological saline, and a part thereof was used in measuring the absorbance (wavelength 570nm), and the viable bacterial count was calculated. Preserved sheep blood was used in determining the hemolysis activity, and the amount of hemolyzed red blood cells was determined by measuring absorbance (wavelength 415 nm). The amount of hemolysin (listeriolysin O) produced was evaluated by measuring the hemolysis activity. The lower the hemolysis activity, the smaller the production of Listeria monocytogenes hemolysin is.

### < Virulence factors production-inhibiting effects on Staphylococcus aureus>

Staphylococcus aureus cultured in brain heart infusion broth for 4 hours was collected centrifugally (7,500 rpm, 2 minutes), and the collected bacterium was suspended in a RPMI1640 culture medium such that the bacterial concentration was 10 times larger than that of the original culture medium. 1 mL of the bacterial suspension (bacterial concentration: 2.7 × 10⁴ bacteria/mL) was inoculated into each autoclaved test piece (0.7g). After statically culturing the bacterium at 37°C for 24 hours, the culture solution that each test piece absorbed was recovered centrifugally (7,840 rpm, 5 minutes). A supernatant obtained was ultrafiltered (elimination size: 30kDa) to concentrate the supernatant by 20 times, and the concentrated supernatant was used in measuring enterotoxin E. The volume of centrifugally precipitated cell body fraction was fixed to 20 mL using physiological saline, and a part thereof was used in determining the absorbance (wavelength 570nm), and the viable bacterial count was calculated. Enterotoxin E was measured using SET-RPLA "Seiken" (manufactured by Denka-Seiken Co., Ltd.).

### < Virulence factors production-inhibiting effects on Escherichia coli O157>

Into a CAYE culture medium "Seiken" (manufactured by Denka-Seiken Co., Ltd.) for use in an Escherichia coli verotoxin detection test, pre-cultivated Escherichia coli 0157 was inoculated, and the bacterium was shake cultured at 37°C for 20 hours. Then, the bacterial suspension obtained (0.1 ml) was suspended in 10 ml CAYE culture medium. After placing the test pieces (0.7 g) in a 50 ml centrifugation tube for autoclave sterilization, 1 mL of the bacterial suspension prepared (bacterial concentration: 6.80 × 10⁶ bacteria/mL) was inoculated into each test piece, and the bacterium was statically cultured at 37°C for 20 hours. After the culturing, the culture solution in each test piece was recovered centrifugally (7,500 rpm, 5 minutes) and was further centrifuged for 2 minutes at 13,500 rpm, and a supernatant obtained was used in measuring verotoxins. After suspending the precipitated bacterium in 20 ml physiological saline, serial dilutions were prepared and the viable bacterial count was calculated by colony count. Abacterial toxin detection kit (VTEC-RPLA "Seiken") was used in measuring verotoxins. In this evaluation method, an agglutinin titer of 1:4 or more was determined as positive. The higher the agglutinin titer, the smaller the production of verotoxins is.

**[TABLE 8]**

| Samples | Viable bacterial count (×10⁹ bacteria/mL) | Hemolysis activity per viable bacterial count Relative value (%) |
|---|---|---|
| Control Sample C1: (untreated) | 2.04 | 100.0 |
| Sample C1: (phosphate) | 1.98 | 39.2 |

**[TABLE 9]**

| Samples | Viable bacterial count (×10⁸ bacteria/mL) | Amount of enterotoxin E produced per viable bacterial count Relative value (%) |
|---|---|---|
| Control Sample C1: (untreated) | 3.6 | 100.0 |
| Sample C1: (phosphoric ester) | 8.7 | 21.0 |

**[TABLE 10]**

| Samples | Viable bacterial count (×10⁸ cfu/mL) | Agglutinin titer | |
|---|---|---|---|
| | | Verotoxin type I | Verotoxin type II |
| Control Sample C1: (untreated) | 1.0 | 1:4 | 1:8 |
| Sample C1: (phosphoric ester) | 0.74 | 1:64 | 1:128 |

As shown in Table 8, the phosphoric ester-introduced 100% cotton fiber fabric of Example 14 was not so different from the untreated Control Sample in terms of viable Listeria monocytogenes count after the culturing, but the hemolysis activity per viable bacterial count was smaller, demonstrating that the fabric had virulence factors (hemolysin) production-inhibiting effects on Listeria monocytogenes.

Further, as shown in Table 9, the phosphoric ester-introduced 100% cotton fiber fabric of Example 14 was not so different from the untreated Control Sample in terms of viable Staphylococcus aureus count after the culturing, but the amount of enterotoxin E produced per viable bacterial count was smaller, demonstrating that the fabric had virulence factors production-inhibiting effects on Staphylococcus aureus.

Further, as shown in Table 10, the phosphoric ester-introduced 100% cotton fiber fabric of Example 14 was not so different from the untreated Control Sample in terms of viable Escherichia coli 0157 count after the culturing, but the agglutinin titer of each of verotoxin type I and verotoxin type II was higher, demonstrating that the fabric of Example 14 had virulence factors production-inhibiting effects on Escherichia coli 0157.

### (Example 15)

A mercerized thin fabric made from 100% cotton fiber (unit weight: 140 g/m²) was immersed into an aqueous solution containing 5.1 mass% phosphoric acid (manufactured by Nacalai Tesque, Inc.) and 18 mass% urea (manufactured by Nacalai Tesque, Inc.), squeezed with a mangle until a pick up of about 70 mass% was achieved, and was dried in a pin tenter at 150°C for 90 seconds. Further, the fabric was cured in the pin tenter at 165°C for 105 seconds. The cured fabric was washed with hot water and then with water sufficiently, squeezed with the mangle and was dried in the pin tenter at 150°C for 90 seconds. The amount of phosphate group introduced per mass of fiber, which was calculated from the difference in mass of the fabric before and after the above process and the molecular weight of phosphoric acid, was 0.21 mmol/g.

### (Acid treatment)

Next, the phosphoric ester-introduced fabric was immersed into a 1 mass% acetic acid (manufactured by Nacalai Tesque, Inc.) aqueous solution and then was squeezed with the mangle until a pick up of about 70 mass% was achieved. In order to remove excess acetic acid, the fabric was washed with hot water and then with water. Subsequently, the fabric was squeezed with the mangle and was dried in the pin tenter at 150°C for 90 seconds. The fabric obtained was used as Sample D1.

Virulence factors production-inhibiting effects of the fabric obtained in Example 15 (Sample D1) on Trichophyton were evaluated by determining Trichophyton's mycelial forming capability as follows. Table 11 below provides the results. An untreated mercerized thin fabric made from 100% cotton fiber was used as Control Sample D1.

### <Effects on Trichophyton>

A solution obtained by suspending 0.5 mL of Sabouraud's glucose medium into 5 mL of pre-cultured slant medium was further added to 5 mL of Sabouraud's glucose medium to obtain a spore suspension. 0.5 mL of the spore suspension was sprayed onto test pieces (0.1 g) one time, and the test pieces were placed on a petri dish to culture the fungus at 28°C for 9 days. After the culturing, the number of fungi (the number of colonies) formed on each test piece was counted. Further, an area of each colony formed on each test piece was measured, and an average area per colony was determined.

**[TABLE 11]**

| Samples | Viable count (cfu/mL) | Average area per colony (cm²) |
|---|---|---|
| Control Sample D1: (untreated) | 65 | 0.36 |
| Sample D1: (phosphoric ester) | 50 | 0.11 |

As can be seen from the results provided in Table 11, the phosphoric ester-introduced 100% cotton fiber fabric of Example 15 was not so different from the untreated Control Sample in terms of viable Trichophyton count after the culturing, but the average area per colony was smaller in the fabric of Example 15 than in the Control Sample, demonstrating that the fabric of Example 15 inhibited Trichophyton's mycelial forming capability.

### (Reference Example 1)

To pyocyanine production cultural media having a Pseudomonas aeruginosa (PA 01 strain) concentration of 2.7 × 10³ bacteria/mL, phosphoric acid, acrylic acid and triphosphoric acid were each added in concentrations as shown in Tables 12 to 13, and the bacterium was shake cultured at 37°C for 48 hours. Thereafter, 1 ml of each culture liquid was centrifuged (14000 rpm, 2 minutes) and a supernatant obtained was used in measuring pyocyanine. A precipitated bacterial fraction was suspended in 0.5 mL physiological saline, and a part thereof was used in measuring the absorbance (wavelength 570 nm) and the viable bacterial count was calculated. Pyocyanine was extracted using chloroform, dissolved in 0.2 M HCl, and quantified by measuring the absorbance (wavelength: 490 nm) of the pyocyanine-dissolved HCl. A pyocyanine production cultural medium to which none of the compounds was added (Pseudomonas aeruginosa concentration: 2.7 × 10³ bacteria/mL) was shake cultured at 37°C for 48 hours and used as a control. Tables 12 to 13 provide the results.

**[TABLE 12]**

| | Viable bacterial count (×10⁹ /mL) | | |
|---|---|---|---|
| Concentration of compound added (mM) | 10 | 20 | 25 |
| Phosphoric acid | 1.60 | 1.56 | 1.49 |
| Acrylic acid | 1.09 | 0.94 | 0.84 |
| Triphosphoric acid | 1.50 | 1.50 | 1.52 |
| Control | 1.42 | | |

**[TABLE 13]**

| | Amount of pyocyanine produced per viable bacterial count Relative value (%) | | |
|---|---|---|---|
| Concentration of compound added (mM) | 10 | 20 | 25 |
| Phosphoric acid | 118 | 105.8 | 107.6 |
| Acrylic acid | 250.1 | 201.8 | 233.1 |
| Triphosphoric acid | 40.3 | 11.5 | 5.4 |
| Control | 100 | | |

As can be seen from Table 12, there was almost no difference in terms of viable bacterial count between the Pseudomonas aeruginosa culture media to which phosphoric acid, acrylic acid and triphosphoric acid were added and the control to which none of the compounds was added. As can be seen from Table 13, in comparison with the control, an amount of pyocyanine produced per viable bacterial count was significantly lower in the Pseudomonas aeruginosa culture medium to which triphosphoric acid was added, and the reducing effect became more pronounced as the amount of triphosphoric acid added was increased. On the other hand, the amount of pyocyanine produced per viable bacterial count was not so different between the Pseudomonas aeruginosa culture medium to which phosphoric acid was added and the control, and the amount of pyocyanine produced per viable bacterial count did not virtually change even when the amount of phosphoric acid added was increased. In the case of the Pseudomonas aeruginosa culture medium to which acrylic acid was added, the amount of pyocyanine produced per viable bacterial count was larger than that in the control. From the above, it was found that triphosphoric acid alone had effects of inhibiting production of virulence factors (pyocyanine) but phosphoric acid and acrylic acid alone had no virulence factors production-inhibiting effect and they were able to inhibit virulence factors production only when they were fixed to a fiber by chemical bonding.

### Industrial Applicability

The inhibitory fiber against virulence factors production (fabric) of the present invention can be used in the following fields, for example.

### (1) Medical white coat and nurse uniform

When a fabric to which an inhibitor of virulence factors production is fixed and is thus effective also on multidrug-resistant bacteria is used in the garment, it is possible to prevent nosocomial infection resulting from clothes of doctors and nurses.

### (2) Underwear and undergarment

It is considered that super anitigen produced by Staphylococcus aggrevates atopic dermatitis when inflammatory portions are infected with the bacterium. If the fiber of the present invention can inhibit Staphylococcus aureus from producing super anitigen, it is possible to develop underwear that can ease atopic dermatitis.

### (3) Medical bandage, gauze, and masks

When the inhibitory fiber against virulence factors production (fabric) of the present invention is used in the form of gauze, bandage, mask, etc., that inhibits virulence bacteria infection through surgery wounds, bruise, bedsores of bedridden patients, etc., it is possible to inhibit multidrug-resistant bacteria infection.

### (4) Adhesive plaster

The inhibitory fiber against virulence factors production of the present invention can be used as a material of adhesive plasters applied to wounds.

### (5) Interior materials such as wall papers, and carpets, bedding materials such as sheets, and nursing care equipment

It is possible to prevent nosocomial infection in hospitals, old-aged homes, nursing homes, nursery schools, kindergartens.

## Claims

1. Use of a fiber comprising an inhibitor of virulence factors production fixed to the fiber by chemical bonding as an inhibitory fiber against virulence factors production,
wherein the inhibitor of virulence factors production includes at least one compound selected from the group consisting of a phosphate group-containing compound, a carboxylic acid group-containing compound, and a ketone group-containing compound.

2. The use according to claim 1, wherein the ratio of the inhibitor of virulence factors production to the fiber is 0.01 to 3 mmol/g.

3. The use according to claim 1 or claim 2, wherein the phosphate group-containing compound is one or more selected from the group consisting of phosphoric ester and phosphate.

4. The use according to any one of claims 1 to 3, wherein the carboxylic acid group-containing compound is one or more selected from the group consisting of acrylate and iminodiacetate.

5. The use according to any one of claims 1 to 4, wherein the ketone group-containing compound is one or more selected from the group consisting of ethylene glycol monoacetoacetate monomethacrylate and diacetone acrylamide.

## Patentansprüche

1. Verwendung einer Faser, die einen Inhibitor der Virulenzfaktorenproduktion aufweist, der mittels chemischer Bindung an die Faser fixiert ist, als eine inhibierende Faser gegen Virulenzfaktorenproduktion, wobei der Inhibitor der Virulenzfaktorenproduktion zumindest eine Komponente enthält, die ausgewählt ist aus der Gruppe, bestehend aus einer Phosphatgruppe-enthaltenden Verbindung, einer Carbonsäuregruppe-enthaltenden Verbindung, und einer Ketongruppe-enthaltenden Verbindung.

2. Verwendung nach Anspruch 1, wobei das Verhältnis des Inhibitors der Virulenzfaktorenproduktion zu der Faser 0,01 bis 3 mmol/g beträgt.

3. Verwendung nach Anspruch 1 oder Anspruch 2, wobei die Phosphatgruppeenthaltende Verbindung eine oder mehrere ist, die ausgewählt ist aus der Gruppe, bestehend aus phosphorhaltigem Ester und Phosphat.

4. Verwendung nach einem der Ansprüche 1 bis 3, wobei die Carbonsäuregruppeenthaltende Verbindung eine oder mehrere ist, die ausgewählt ist aus der Gruppe, bestehend aus Acrylat und Iminodiacetat.

5. Verwendung nach einem der Ansprüche 1 bis 4, wobei die Ketongruppeenthaltende Verbindung eine oder mehrere ist, die ausgewählt ist aus der Gruppe, bestehend aus Ethylenglykolmonoacetoacetat-Monomethacrylat und Diaceton-Acrylamid.

## Revendications

1. Utilisation d'une fibre comprenant un inhibiteur de production de facteurs de virulence fixé à la fibre par liaison chimique en tant que fibre inhibitrice contre la production de facteurs de virulence,
dans laquelle l'inhibiteur de production de facteurs de virulence inclut au moins un composé sélectionné à partir du groupe constitué par un composé contenant un groupe phosphate, un composé contenant un groupe acide carboxylique, et un composé contenant un groupe cétone.

2. Utilisation selon la revendication 1, dans laquelle le rapport de l'inhibiteur de production de facteurs de virulence sur la fibre est de 0,01 à 3 mmol/g.

3. Utilisation selon la revendication 1 ou la revendication 2, dans laquelle le composé contenant un groupe phosphate est un ou plusieurs sélectionnés à partir du groupe constitué par de l'ester phosphorique et du phosphate.

4. Utilisation selon l'une quelconque des revendications 1 à 3, dans laquelle le composé contenant un groupe acide carboxylique est un ou plusieurs sélectionnés à partir du groupe constitué par un acrylate et un iminodiacétate.

5. Utilisation selon l'une quelconque des revendications 1 à 4, dans laquelle le composé contenant un groupe cétone est un ou plusieurs sélectionnés à partir du groupe constitué par du monométhacrylate de monoacétoacétate d'éthylène glycol et de l'acrylamide de diacétone.
